# EUROPEAN PATENT SPECIFICATION

(11) **EP 4 445 815 B1**
(45) Date of publication and mention of the grant of the patent: **29.10.2025**
(21) Application number: 23168064.6
(22) Date of filing: 14.04.2023
(51) Int. Cl.: A47J 43/07

(54) **COOKING POT LOCKING MECHANISM AND FOOD PROCESSOR COMPRISING THE COOKING POT LOCKING MECHANISM**
KOCHTOPFVERRIEGELUNGSMECHANISMUS UND KÜCHENMASCHINE MIT DEM KOCHTOPFVERRIEGELUNGSMECHANISMUS
MÉCANISME DE VERROUILLAGE DE RÉCIPIENT DE CUISSON ET ROBOT DE CUISINE COMPRENANT LE MÉCANISME DE VERROUILLAGE DE RÉCIPIENT DE CUISSON

(43) Date of publication of application: 16.10.2024
(73) Proprietor: Suntek Industries (Hong Kong) Company Limited, Shatin, New Territories (HK)
(72) Inventor: WONG, Wing Wai, Hong Kong (HK); POON, Ho Kai, Hong Kong (HK)
(74) Representative: Gunzelmann, Rainer

(56) References cited:
- EP-B1- 1 711 091
- US-A1- 2012 325 948
- US-A1- 2021 274 975
- US-B2- 9 763 542

## Description

The present application relates to a cooking pot locking mechanism designed for selectively locking a cooking pot of a food processor to a base of the food processor in its lock state and unlocking the cooking pot from the base in its unlock state, and to a food processor comprising the cooking pot locking mechanism.

Said cooking pot locking mechanism is necessary to prevent removal of the cooking pot from the base during cooking operation, i.e., when the food processor is operating in a food processing mode in which removal of the cooking pot is undesired. Preventing removal of the cooking pot from the base during cooking operation is a positive security aspect and necessary to ensure a cooking operation to be performed in line with a predefined, i.e., programmed process to achieve a desired result.

US 9 763 542 B2 concerns an anti-rotational latch for a blending appliance. A jar retainer mechanism for a blending appliance includes an articulating arm pivotally coupled to a housing of the blending appliance. The articulating arm is operable between engaged and disengaged positions and includes a latch member disposed on a first end of the articulating arm. The latch member is configured to engage an engagement tab disposed on a blender jar when the articulating arm is in the engaged position and the blender jar is received laterally in a jar receiving portion. A push member is disposed on a second end of the articulating arm and is configured to displace the blender jar when the articulating arm is moved towards the disengaged position.

US 2012/325948 A1 concerns a combined food processing machine which accepts the incorporation of multiple accessories and includes a fast anchoring and fixing device which can be actuated by a user to associate an accessory to said machine and multiple detectors, particularly magnetic, for the purpose of automatically identifying the type of accessory which has been associated with the machine and determining the operating condition of said accessory.

According to the present application and as defined in claim 1, such a cooking pot locking mechanism comprises at least one locking element actuatable to move between a lock position and an unlock position, and actuation means drivable to move between a first position and a second position. In its lock position, the at least one locking element is designed to engage the cooking pot so as to lock the cooking pot to the base. In its unlock position, the at least one locking element is designed not to engage the cooking pot so as to allow unobstructed removal of the cooking pot from the base. Unobstructed removal is to be understood as a removal for which an absolute value of a force necessary for removing the cooking pot from the base substantially corresponds to an absolute value of the cooking pot's weight force. The actuation means are designed for functional cooperation with the at least one locking element so that movement of the actuation means results in corresponding movement of the at least one locking element. In detail, the actuation means' functional cooperation with the at least one locking element is designed to match the first position of the actuation means with the lock position of the at least one locking element and to match the second position of the actuation means with the unlock position of the at least one locking element, and a driving system designed for controlled driving of the actuation means to move between the first and second positions, the driving system comprises driving means and control means, the driving means being a motor for driving the actuation means to move in a first direction towards and into the first position of the actuation means and in a second direction towards and into the second position of the actuation means, the second direction being opposite the first direction, and the control means being a first switch and a second switch, the first switch actuatable by the actuation means when positioned in the first position and, preferably, adapted to signal positioning of the cooking pot locking mechanism in its lock state in response to said actuation, and the second switch actuatable by the actuation means when positioned in the second position and, preferably, adapted to signal positioning of the cooking pot locking mechanism in its unlock state in response to said actuation.

Preferably, there is a plurality of locking elements. Each locking element may be considered a chuck element. For a plurality of locking elements, the locking elements may function like a chuck.

The at least one locking element may have opposite upper and lower surfaces extending between an engagement end designed for engaging the cooking pot and an opposite free end of the at least one locking element. To ease engagement of the at least one locking element with the cooking pot, at least a section of the lower surface adjacent the engagement end can be sloped towards the engagement end of the at least one locking element. When locking the cooking pot to the base, it is the engagement end of the at least one locking element which engages the cooking pot. During movement of the at least one locking element into its lock position, the sloped lower surface of the locking element eases insertion of the locking element engagement end into a locking receptacle of the cooking pot. It is conceivable that the engagement end of the at least one locking element and the locking receptacle of the cooking pot have mating shapes, at least in cross-section and when the engagement end is fully inserted into the locking receptacle. Especially, the locking receptacle can have a sloped surface arranged for being engaged by the sloped surface of the at least one locking element. Then, when the sloped surface of the at least one locking element engages the sloped surface of the locking receptacle, further movement of the locking element into the locking receptacle, i.e., of the sloped surfaces along each other, forces the cooking pot further onto the base, i.e., into close abutment of at least a portion of the cooking pot with at least a portion of the base. Thereby, the at least one locking element, at least in its lock position, is adapted to hold the cooking pot in a stable and secure position relative to the base. Said effect achieved by the engagement of the sloped surfaces of the locking element and the receptacle is also conceivable for only the locking element having a sloped surface. In fact, also engagement of a lower edge section of a circumferential edge delimiting the receptacle relative to an outer surface of the cooking pot with the sloped surface of the locking element and sliding movement of the sloped surface of the locking element into its locking position over said lower edge section of the receptacle is also adapted to force the cooking pot further onto the base. There may be a compressible material provided in between the cooking pot and the base so that a receptacle of the cooking pot and a locking element of the cooking pot locking mechanism are not fully aligned in a direction along which the cooking pot is placed onto and/or into the base as long as the cooking pot is only received on and/or in the base without being locked to the base. However, the cooperation of sloped surface of the locking element with the receptacle (irrespective of the receptacle also having a sloped surface or not) during movement of the locking element into its lock position is designed to fully align the locking element with the receptacle by compressing the compressible material as a result of forcing the cooking put further onto and/or into the base.

The actuation means may comprise at least one guide track, the at least one guide track designed to functionally engage with the at least one locking element, preferably in a one-to-one manner so that each guide track is designed to functionally engage with one locking element. Each guide track may be a longitudinal through bore or hole extending through a body of the actuation means or a longitudinally extending opening, such as a groove, in a surface of the body of the actuation means but not extending through the actuation means' body. The functional engagement of the guide track with at least one locking element then can be realized by each locking element comprising a protrusion, such as a pin, received in the guide track. Then, when the actuation means moves, its at least one guide track moves accordingly, as it is an integral part of the actuation means. Preferably, the at least one guide track is linear, at least in part, but it is also conceivable that the at least one guide track has a curved shape. Also, a combination of linear and curved sections is possible for the at least one guide track. For achieving the defined functional cooperation, an orientation of the guide track's extension should be oblique relative to the movement direction of the locking element.

The actuation means may be adapted to rotate about an axis. The at least one locking element may be adapted to move in a linear direction and, preferably, linearly in a radial direction of the rotation axis of the actuation means. A position of the at least one locking element relative to the actuation means is to be chosen and their functional cooperation is to be realized accordingly to allow rotational movement of the actuation means to cause linear movement of the at least one locking member.

According to one embodiment, the actuation means is ring-shaped and designed to be arranged to surround a cooking pot when received on and/or in the base of the food processor. Such ring-shaped actuation means may preferably be designed to rotate about an axis located in a center of the ring. A plurality of locking elements may be arranged in a spaced apart manner from one another relative to, i.e., around, a circumference of said ring. The driving means, which is a motor and more preferably is an electrical motor, is designed for driving the actuation means to move in a first direction towards and into the first position of the actuation means and in a second direction towards and into the second position of the actuation means, wherein the second direction is opposite to the first direction. For the driving means being a motor, the motor can be operated in a forward and a reverse direction, corresponding to the opposite first and second directions, respectively. For example, motor operation in the forward direction is adapted to cause the cooking pot locking mechanism to move to and enter its lock state so as to lock the cooking pot to the base, and motor operation in the reverse direction is adapted to cause the cooking pot locking mechanism to move to and enter its unlock state so as to allow removal of the cooking pot from the base. The control means is a first and a second switch, of which the first switch is actuatable by the actuation means when positioned in the first position and adapted to stop operation of the driving means in response to this actuation, and of which the second switch is actuatable by the actuation means when positioned in the second position and adapted to stop operation of the driving means in response to this actuation. The first and second switches may be tip switches, i.e., switches which automatically return to their initial position after actuation. The cooking pot locking mechanism is preferably bi-stable, i.e., stably remains in each of its lock and unlock states as long as the driving means is not driving the actuation means to change the current state.

The cooking pot locking mechanism may also comprise a support structure designed for receiving a cooking pot and for supporting the at least one locking element as well as the actuation means in a manner allowing movement of the at least one locking element and the actuation means relative to the support structure. The support structure may comprise a receptacle dimensioned and sized to receive a cooking pot and especially a lower and/or bottom portion of the cooking pot. The support structure may further comprise a flange circumferentially surrounding the receptacle, wherein the flange supports the at least one locking element and the actuation means. Alternatively, it is however also conceivable that the at least one locking element and the actuation means are mounted to the receptacle so that the flange (at least to the extent it is large enough to allow mounting of components thereto) could be omitted. Irrespective of how the at least one locking element and the actuation means are mounted to the support structure, the receptacle is formed with at least one opening, especially in a circumferential wall laterally delimiting the receptacle, said opening allowing movement of a locking element therethrough in order for the locking element to be able to engage a cooking pot received in the receptacle.

According to the present application and as defined in claim 10, the above-described cooking pot locking mechanism is a component of a food processor which comprises a cooking pot having at least one locking receptacle and a base configured to receive the cooking pot. The cooking pot locking mechanism of the food processor is part of the base and the at least one locking element of the cooking pot locking mechanism is designed for engaging the at least one locking receptacle of the cooking pot to lock the cooking pot to the base. The base further comprises a cooking pot locking and unlocking control configured to control operation of the cooking pot locking mechanism. In detail, said control may receive a signal that the cooking pot locking mechanism is in its lock position or in its unlock position. Such a signal may be generated by the first switch for the lock position when the first switch is actuated and by the second switch for the unlock position when the second switch is actuated. Based on said signals and when operation of the cooking pot locking mechanism to change between its lock and unlock states is intended, e.g., a change to the lock state when food preparation is to be started or a change to the unlock state when food preparation is finished, the control may cause the driving means to drive the actuation means into the second direction when a signal indicative of the at least one locking element being in its lock position has been received previously or cause the driving means to drive the actuation means into the first direction when a signal indicative of the at least one locking element being in its unlock position has been received previously. For the driving means being a motor, the operation direction of the motor can be chosen or triggered by means of a relay configured to alter the power flow direction through the motor and, thereby, changing the direction in which the motor operates, i.e., a rotor of the motor rotates around a stator of the motor.

The cooking pot locking and unlocking control comprises at least one control processor (e.g., a microcontroller) and a cooking pot locking and unlocking circuit electrically connected to the driving system of the cooking pot locking mechanism and the at least one control processor. Said circuit is connected to the driving system of the cooking pot locking mechanism so as to allow signal transfer from the control means of the driving system, such as the signals from the first and second switches indicative of the cooking pot locking mechanism being in its lock or unlock state, to the control processor. The above-mentioned relay may be part of said circuit.

Moreover, such a signal from the cooking pot locking mechanism may be used by a food processor main control to allow or prevent start of food preparation in dependence on a status indication for the cooking pot locking mechanism, i.e., the cooking pot locking mechanism being in its lock or unlock state, by said signal. In other words, the food processor main control may allow start of food preparation only when a signal from the first switch is received and prevent start of food preparation when a signal from the second switch indicates that the cooking pot is not securely locked to the base. For signal transfer, the food processor main control could be electrically connected to the control processor of the cooking pot locking and unlocking control. The cooking pot locking and unlocking control may be a subcircuit of the food processor main control.

For the at least one locking element being a plurality of locking elements, the at least one locking receptacle of the cooking pot is a corresponding plurality of locking receptacles, so that, preferably, there is a locking receptacle for each locking element. In order to provide an optimized stability for the cooking pot when locked to the base, the plurality of the locking receptacles is arranged at circumferentially spaced apart locations on and/or in the cooking pot and the plurality of locking elements are arranged at corresponding circumferentially spaced apart locations around the cooking pot to selectively engage and disengage the locking receptacles.

The at least one locking receptacle of the cooking pot preferably is a blind hole designed to receive the engagement end of the at least one locking element. Alternatively, it may also be designed as a through hole through a circumferential bottom wall of the cooking pot, for example, serving to stably place the cooking pot on a surface, the through hole designed to receive the engagement end of the at least one locking element.

The cooking pot may comprise a cutting unit for cutting ingredients received in the cooking pot. The cutting unit is adapted to be operatively connected to a driving unit when the cooking pot is received in and/or on the base. Preferably, the driving unit for the cutting unit and the driving means for operating the cooking pot locking mechanism are different components. The cutting unit can comprise a plurality of cutting blades configured to rotate inside the cooking pot for cutting action. More generally, the cutting unit may comprise cutting means configured to cut ingredients receiving in the cooking pot. A drive control for controlling operation of the cutting unit of the cooking pot then is provided in the base. The drive control is adapted to prevent or stop operation of the cutting unit of the cooking pot when the cooking pot is not locked to the base by means of the cooking pot locking mechanism.

The food processor may further comprise a lid for closing the cooking pot, wherein the cooking pot and/or the base then comprises means for detecting if the cooking pot is closed by the lid or if the cooking pot is not closed by the lid. Then, the drive control for controlling operation of the cutting unit of the cooking pot is adapted to prevent or stop operation of the cutting unit when the cooking pot detecting means detects that the cooking pot is not closed by the lid.

Generally, the above-described cooking pot locking mechanism is configured to selectively provide a mechanical interlock between the base and the cooking pot when received in and/or on the base.

A detailed description of an exemplary embodiment of the claimed cooking pot locking mechanism is given in the following with reference to the figures which show schematically:
- Figs. 1A and 1B: a front view and side view of a food processor with which the cooking pot locking mechanism can be used;
- Fig. 2: an exploded view of the food processor of Figs. 1A and 1B including the cooking pot locking mechanism;
- Fig. 3: an exploded view of the cooking pot locking mechanism used in the food processor of Fig. 2;
- Figs. 4A and 4B: bottom views of the cooking pot locking mechanism of Fig. 3 in its lock state (Fig. 4A) and unlock state (Fig. 4B); and
- Figs. 5A and 5B: respective cross-sectional side views of the cooking pot locking mechanism in its lock and unlock states according to Figs. 4A and 4B.

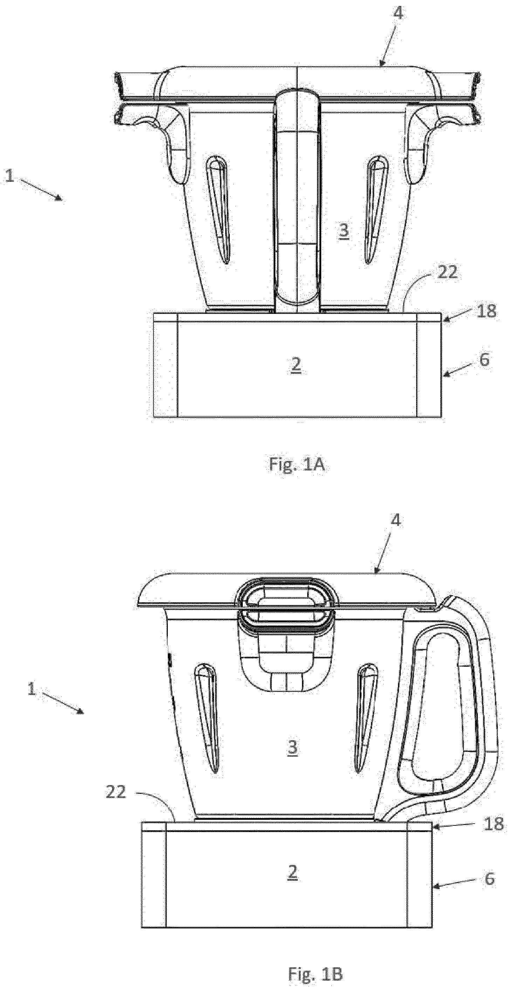

In Figs. 1A and 1B, a food processor 1 comprising a base 2 and a cooking pot 3 closed by a removable lid 4 and received on and/or in the base 2 is shown in front and side views, respectively. The cooking pot 3 is lockable to and removable from the base 2, wherein the corresponding locked and unlocked states of the cooking pot are controllable by a cooking pot locking and unlocking control which can be housed in the base 2. There can be one or more sensors or other detecting means for sensing or detecting at least one of the cooking pot 3 being in position on and/or received in the base 2, and the lid 4 closing an opening of the cooking pot 3, and, preferably, there are sensors for sensing both.

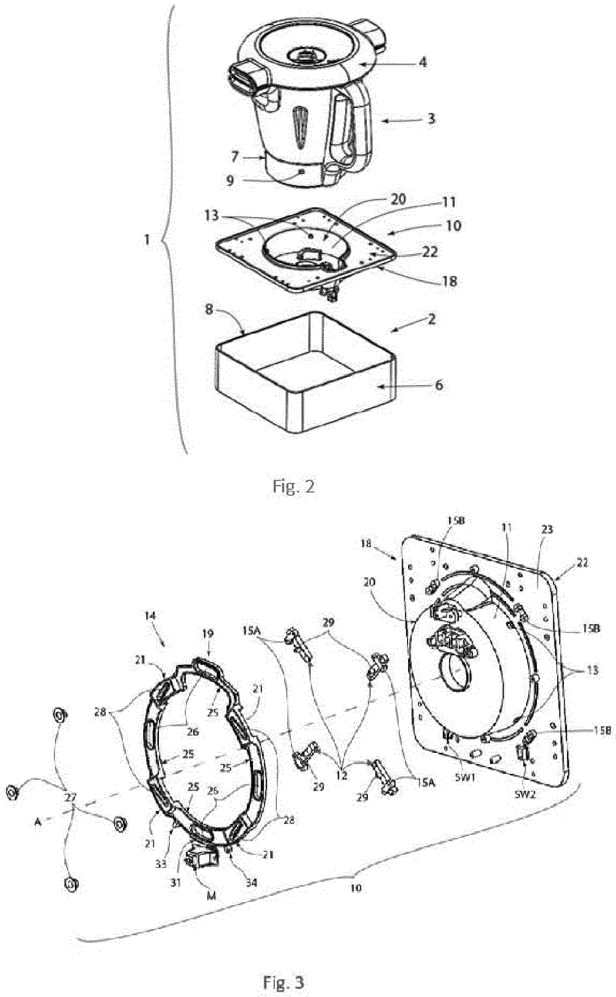

A cooking pot locking mechanism 10 (only visible in part, namely as a cover on the base 2 in Figs. 1A and 1B but shown in the exploded view of Fig. 2 and detailed with reference to Figs. 3 to 5B below) is provided within and/or forms part of the base 2. The cooking pot locking mechanism 10 is operable to releasably lock the cooking pot 3 to the base 2 in its lock state and allow unobstructed removal of the cooking pot 3 form the base 2 in its unlock state. The base 2 may be further provided with a cooking pot locking and unlocking control (not shown in the figures) configured to control operation of the cooking pot locking mechanism 10.

The cooking pot 3 may comprise cutting means drivable by a driving unit, i.e., a motor, housed in the base 2, the driving unit configured to operate the cutting means preferably being separate from driving means configured to operate the cooking pot locking mechanism. The cooking pot 3 and base 2 preferably comprise respective mating interfaces for operatively coupling the cooking pot 3 to components housed in the base 2, such as the motor for operating the cutting means. The base 2 may further comprise a drive control for controlling operation of the cutting means, the drive control preferably adapted to prevent or stop operation of the cutting means when the cooking pot 3 is not closed by the lid 4 which may be detected by the above-mentioned detecting means and/or not securely locked to the base 2.

When the cooking pot 3 is positioned on and/or received in the base 2 and the cooking pot locking mechanism 10 is in its lock position, there is a mechanical interlock between the base 2 and the cooking pot 3. Said mechanical interlock will be described in detail in the following.

Fig. 2 shows an exploded view of the food processor 1. The base 2 is represented by its housing 6. Functional and control components accommodated in the base housing 6 and necessary for the food processor 1 to operate are omitted. The focus of Fig. 2 is on the cooking pot locking mechanism 10. The cooking pot locking mechanism 10 is shown to comprise a support structure 18. The support structure 18 has a central receptacle 20 shaped to matingly receive a lower portion 7 of the cooking pot 3. The support structure 18 further has a flange 22 circumferentially surrounding the receptacle 20 and, according to the specific and non-limiting design example of Figs. 1A, 1B and 2, shaped to fit in a lid-like manner onto an upper circumferential rim 8 of the base housing 6 so as to cover an upper opening of the base housing 6.

For the mentioned mechanical interlock of the cooking pot locking mechanism 10 with the cooking pot 3 in the lock state of the cooking pot locking mechanism 10, the cooking pot lower portion 7 comprises locking receptacles 9 in the form of rectangularly shaped openings (only one of which visible in Fig. 2), and a circumferential wall 11 laterally delimiting the receptacle 20 comprises correspondingly shaped through holes 13 (only two of which visible in Fig. 2).

As shown in the exploded bottom view of the cooking pot locking mechanism 10 of Fig. 3, in the specific and non-limiting design example shown, there are four locking elements 12 mountable to a lower surface 23 of the flange 22 of the support structure 18 via mounting means 15A, 15B. The mounting means 15A, 15B when assembled are designed to provide rectangular through holes, with each through hole dimensioned to receive a portion of one of the locking elements 12 so as to provide for slidable linear guidance of the locking elements 12 relative to the support structure 18. As is clear from Fig. 3, said slidable guidance of the mounting means 15A, 15B is oriented to allow linear movement of the locking elements 12 into and through the through holes 13 of the receptacle's circumferential wall 11 and into the locking receptacles 9 of the cooking pot lower portion 7.

An actuation means 14 for actuating said linear movement of the locking elements 12 relative to the support structure 18 is shown as ring-shaped member in Fig. 3. According to the specific and non-limiting example of Fig. 3, the actuation means 14 comprises a body 19 having sections 21 adapted to guide movement of the locking elements 12 in a locking direction and an opposed unlocking direction and sections 25 adapted to mount the actuation means 14 to the support structure 18 in a manner allowing rotatory movement of the actuation means 14 relative to the support structure 18. Especially, the ring-shaped actuation means 14 when mounted to the support structure 18 is rotatable around an axis A extending through a centre of the receptacle 20 and perpendicularly to a planar extension of the lower surface 23 of the support structure 18. Relative to this axis A, the mounting means 15A, 15B allow linear movement of the locking elements 12 in a radial direction. Mounting sections 25 and movement guiding sections 21 of the actuation means 14 are arranged alternatingly on the ring-shape. In the specific and non-limiting example of Fig. 3, there are four mounting sections 25 and four movement guiding sections 21. Each of the mounting sections 25 is formed with an elongated arc-shaped through hole 26, the arc-shape corresponding to the ring-shape of the actuation means 14. Four mounting elements 27, which may be realized as guide bushings, are provided for rotatably mounting the actuation means 14 to the lower surface 23 of the flange 22 via the elongated through holes 26. In the movement guiding sections 21, the actuation means 14 has a stepped profile allowing accommodation of the locking elements 12 between the lower surface 23 of the flange 22 and the movement guiding sections 21 of the actuation means 14 when the actuation means 14 and the locking elements 12 are mounted to the flange 22. Movement guidance of the locking elements 12 in the locking and unlocking directions is realized by each movement guidance section 21 of the actuation means 14 having a guide track realized as a longitudinal movement guidance through hole 28, with the through hole's longitudinal extension being oblique to the radial direction of the axis around which the actuations 14 is rotatable, and each locking element 12 having a pin 29 oriented and shaped to be received in a movement guidance through hole 28 of the actuations means when the actuation means 14 and the locking elements 12 are mounted to the flange 22. The oblique extension of each movement guidance through hole 28 is delimited by opposed first and second ends and is such that, with the pins 29 of the locking elements 12 being positioned adjacent the first ends within the movement guidance through holes 28, the locking elements 12 extend through the through holes 13 of the receptacle 20 of the support structure 18 and, for the cooking pot 3 received in the receptacle 20, into the locking receptacles 9 of the lower portion 7 of the cooking pot 3, and, with the pins 29 of the locking elements 12 being positioned adjacent the second ends within the movement guidance through holes 28, end faces 30 of the locking elements 12 preferably lie flush with an inner surface 32 of the circumferential wall 11 of the receptacle 20 and at least do not extend into the locking receptacles 9 of the lower portion 7 of the cooking pot 3 when received in the receptacle 20.

At least a section of the circumference of the actuation means 14 is formed with means for interacting with driving means of the cooking pot locking mechanism 10, said means being realized as a plurality of teeth 31 extending radially away from an outer circumference of at least a section of the actuation means 14. According to Fig. 3, the driving means is a motor M mountable to the lower surface 23 of the support structure 18 in a manner to operatively interact with the teeth 31 when the motor M and the actuation means 14 are mounted to the support structure 18. The motor M is configured to selectively output a driving force in a first direction and an opposite second direction. Motor output of a driving force in the first direction causes the actuation means 14 to rotate in said first direction until the pins 29 of the locking elements 12 are positioned adjacent the first ends within the movement guidance through holes 28 when the motor M, the actuation means 14 and the locking elements 12 are mounted to the support structure 18. Motor driving force output in the second direction causes the actuation means 14 to rotate in said second direction until the pins 29 of the locking elements 12 are positioned adjacent the second ends within the movement guidance through holes 28 when the motor M, the actuation means 14 and the locking elements 12 are mounted to the support structure 18. In order to allow the cooking pot locking mechanism to signal its positioning in its lock state, a first lock position switch SW1 is mounted to the lower surface 23 of the support structure 18. Actuation of said first switch SW1 causes the cooking pot locking mechanism, and especially, control means of the cooking pot locking mechanism to output a lock signal indicative of the cooking pot locking mechanism being positioned in its lock state. The food processor's main control may allow start of food preparation in response to receiving this lock signal. In order to allow the cooking pot locking mechanism to signal its positioning in its unlock state, a second lock position switch SW2 is mounted to the lower surface 23 of the support structure 18. Actuation of the second switch SW2 causes the cooking pot locking mechanism, and especially, control means of the cooking pot locking mechanism to output an unlock signal indicative of the cooking pot locking mechanism being positioned in its unlock state. The food processor's main control may prevent food preparation in response to receiving this unlock signal. For actuating the first and second switches SW1, SW2, respective first and second tabs 33, 34 extend from the outer circumference of the actuation means 14. In Fig. 3, the section with the teeth 31 on the outer circumference of the actuation means 14 is positioned in between these first and second tabs 33, 34. The position of the first and second tabs 33, 34 on the actuation means 14 is such that when the pins 29 of the locking elements 12 are positioned adjacent the first ends within the movement guidance through holes 28, the first tab 33 contacts the first switch SW1 to actuate same, and when the pins 29 of the locking elements 12 are positioned adjacent the second ends within the movement guidance through holes 28, the second tab 34 contacts the second switch SW2 to actuate same.

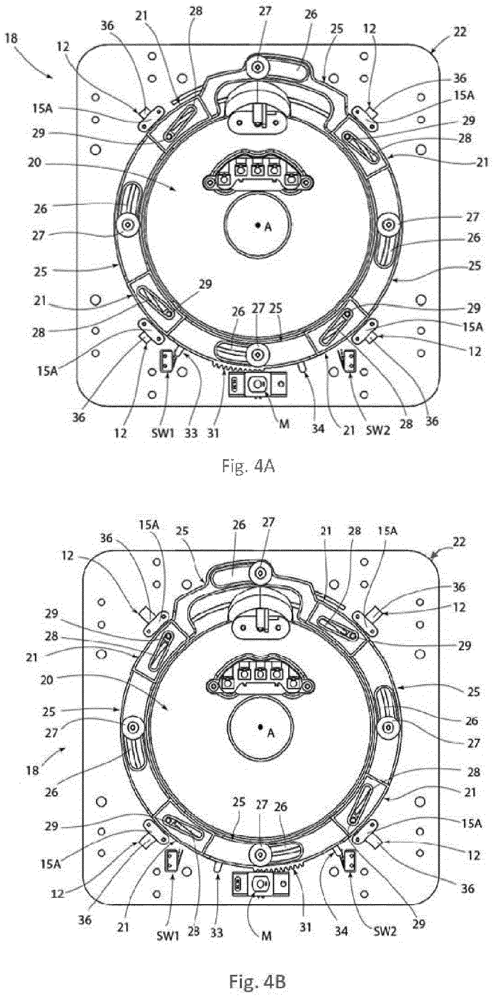

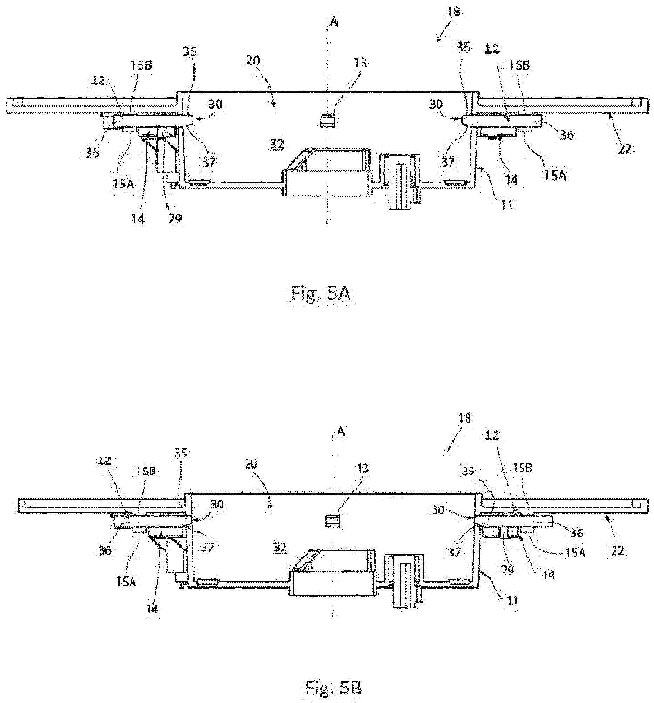

Figs. 4A and 4B provide bottom views of the cooking pot locking mechanism 10 of Fig. 3 when assembled in the lock state (Fig. 4A) and in the unlock state (Fig. 4B), and Figs. 5A and 5B provide corresponding side views of the cooking pot locking mechanism 10 of Fig. 3 when assembled in cross section along the axis around which the actuation means 14 are rotatable with the cooking pot locking mechanism 10 in its lock state (Fig. 5A) and in its unlock state (Fig. 5B). The lock and unlock states of the cooking pot locking mechanism 10 have already been described in detail with reference to Fig. 3 above.

As best seen in Fig. 5A, each locking element 12 has opposite upper and lower surfaces extending between an engagement end 35 designed for engaging the cooking pot 3 and an opposite free end 36 of the at least one locking element 12. To ease engagement of the locking elements 12 with the locking receptacles 9 of cooking pot 3, at least a section 37 of the lower surface adjacent the engagement end 35 of each locking element 12 is sloped towards the engagement end 35. When locking the cooking pot 3 to the base 2, the engagement ends 35 of the locking elements 12 engage the cooking pot locking receptacles 9. During movement of the locking elements 12 into their lock position, the sloped lower surfaces 37 of the locking elements 12 ease insertion of the locking elements' engagement ends 35 into the locking receptacles 9 of the cooking pot 3. When the cooking pot locking mechanism 10 is assembled, the sloped lower surfaces 37 face away from an insertion direction of the cooking pot 3, i.e., face in the same direction as the direction along which the cooking pot 3 is placed onto and/or into the base 2 is oriented, and especially faces away from the lower surface 23 of the support structure 18.

## Claims

1. Cooking pot locking mechanism (10) designed for selectively locking a cooking pot (3) of a food processor (1) to a base (2) of the food processor (1) in a lock state and unlocking the cooking pot (3) from the base (2) in an unlock state, the cooking pot locking mechanism (10) comprising:
at least one locking element (12) actuatable to move between a lock position and an unlock position, wherein the at least one locking element (12) is designed to engage the cooking pot (3) so as to lock the cooking pot (3) to the base (2) in its lock position and not to engage the cooking pot (3) so as to allow unobstructed removal of the cooking pot (3) from the base (2) in its unlock position,
actuation means (14) drivable to move between a first position and a second position, the actuation means (14) designed for functional cooperation with the at least one locking element (12) so that movement of the actuation means (14) results in corresponding movement of the at least one locking element (12), wherein the actuation means' functional cooperation with the at least one locking element (12) is designed to match the first position of the actuation means (14) with the lock position of the at least one locking element (12) and to match the second position of the actuation means (14) with the unlock position of the at least one locking element (12), and
a driving system (M, SW1, SW2) designed for controlled driving of the actuation means (14) to move between the first and second positions,
the driving system comprises driving means (M), said cooking pot locking mechanism being **characterised in that** the driving system further comprises control means (SW1, SW2),
the driving means being a motor (M) for driving the actuation means (14) to move in a first direction towards and into the first position of the actuation means (14) and in a second direction towards and into the second position of the actuation means (14), the second direction being opposite the first direction, and
the control means being a first switch (SW1) and a second switch (SW2), the first switch (SW1) actuatable by the actuation means (14) when positioned in the first position and, preferably, adapted to signal positioning of the cooking pot locking mechanism in its lock state in response to said actuation, and the second switch (SW2) actuatable by the actuation means (14) when positioned in the second position and, preferably, adapted to signal positioning of the cooking pot locking mechanism in its unlock state in response to said actuation.

2. Cooking pot locking mechanism (10) of claim 1, wherein the at least one locking element is a plurality of locking elements (12).

3. Cooking pot locking mechanism (10) of claim 1 or 2, wherein the actuation means (14) comprises at least one guide track (28), with each guide track (28) preferably designed to functionally engage with one locking element (12).

4. Cooking pot locking mechanism (10) of any one of claims 1 to 3, wherein the actuation means (14) is adapted to rotate about an axis (A) and the at least one locking element (12) is adapted to move in a linear direction, wherein, preferably, the at least one locking element (12) is positioned relative to the actuation means (14) to linearly move in a radial direction of the axis (A).

5. Cooking pot locking mechanism (10) of any one of claims 1 to 4, wherein the actuation means (14) is ring-shaped and adapted to be arranged to surround a cooking pot (3) when received on and/or in the base (2) of the food processor (1).

6. Cooking pot locking mechanism (10) of claim 5 as far as dependent on claim 2, wherein the plurality of locking elements (12) are arranged spaced apart from one another around a circumference of the actuation means (14).

7. Cooking pot locking mechanism (10) of any one of claims 3, and 4 to 6 as far as dependent on claim 3, wherein the at least one guide track (28) has a longitudinal extension in a direction oblique relative to a movement direction of the at least one locking element (12).

8. Cooking pot locking mechanism (10) of any one of claims 1 to 7, further comprising a support structure (18) designed for receiving the cooking pot (3) and for supporting the at least one locking element (12) as well as the actuation means (14) in a manner allowing movement of the at least one locking element (12) and the actuation means (14) relative to the support structure (18).

9. Cooking pot locking mechanism (10) of claim 8, wherein the support structure (18) comprises a receptacle (20) for receiving the cooking pot (3) and a flange (22) circumferentially surrounding the receptacle (20), the flange (22) supporting the at least one locking element (12) and the actuation means (14).

10. Food processor (1) comprising:
a cooking pot (3) having at least one locking receptacle (9);
a base (2) configured to receive the cooking pot (3), the base (2) comprising:
the cooking pot locking mechanism (10) of any one of claims 1 to 9, with the at least one locking element (12) designed for engaging the at least one locking receptacle (9) to lock the cooking pot (3) to the base (2); and
a cooking pot locking and unlocking control configured to control operation of the cooking pot locking mechanism (10),
**characterized in that**
the cooking pot locking and unlocking control comprises at least one control processor and a cooking pot locking and unlocking circuit electrically connected to the driving system (M, SW1, SW2) of the cooking pot locking mechanism (10) and the at least one control processor.

11. Food processor (1) of claim 10, wherein the at least one locking element (12) is a plurality of locking elements (12) and the at least one locking receptacle (9) is a corresponding plurality of locking receptacles (9) with the locking receptacles (9) being positioned at circumferentially spaced apart locations on and/or in the cooking pot (3), and wherein the plurality of locking elements (12) is arranged to selectively engage and disengage the plurality of locking receptacles (9) of the cooking pot (3) at the circumferentially spaced apart locations of the cooking pot (3) when the cooking pot (3) is received by the base (2).

12. Food processor (1) of any one of claims 10 to 11, further comprising a cutting unit within the cooking pot (3) and a drive control for controlling operation of the cutting unit of the cooking pot (3) within the base (2), wherein the drive control is adapted to prevent or stop operation of the cutting unit of the cooking pot (3) when the cooking pot (3) is not locked to the base (2) by means of the cooking pot locking mechanism (10).

## Patentansprüche

1. Topfverriegelungsmechanismus (10), ausgelegt zum selektiven Verriegeln eines Kochtopfs (3) eines Küchenverarbeitungsgeräts (1) mit einem Boden (2) des Küchenverarbeitungsgeräts (1) in einem Verriegelungszustand und zum Entriegeln des Kochtopfs (3) vom Boden (2) in einem Entriegelungszustand, wobei der Topfverriegelungsmechanismus (10) umfasst:
zumindest ein Verriegelungselement (12), das betätigbar ist, um sich zwischen einer Verriegelungsposition und einer Entriegelungsposition zu bewegen, wobei das zumindest eine Verriegelungselement (12) ausgelegt ist, mit dem Kochtopf (3) so in Eingriff zu treten, dass der Kochtopf (3) in seiner Verriegelungsposition mit dem Boden (2) verriegelt ist, und so nicht in Eingriff zu treten, dass ungehinderte Entnahme des Kochtopfs (3) vom Boden (2) in seiner Entriegelungsposition ermöglicht wird,
Betätigungsmittel (14), die antreibbar sind, um sich zwischen einer ersten Position und einer zweiten Position zu bewegen, wobei die Betätigungsmittel (14) zur funktionellen Zusammenarbeit mit dem zumindest einen Verriegelungselement (12) ausgelegt sind, sodass eine Bewegung der Betätigungsmittel (14) eine entsprechende Bewegung des zumindest einen Verriegelungselements (12) bewirkt, wobei die funktionelle Zusammenarbeit der Betätigungsmittel mit dem zumindest einen Verriegelungselement (12) so gestaltet ist, dass die erste Position der Betätigungsmittel (14) der Verriegelungsposition des zumindest einen Verriegelungselements (12) entspricht und die zweite Position der Betätigungsmittel (14) der Entriegelungsposition des zumindest einen Verriegelungselements (12) entspricht, und
ein Antriebssystem (M, SW1, SW2), ausgelegt zum gesteuerten Antreiben der Betätigungsmittel (14) zur Bewegung zwischen der ersten und der zweiten Position,
wobei das Antriebssystem Antriebsmittel (M) umfasst, wobei der Topfverriegelungsmechanismus **dadurch gekennzeichnet ist, dass** das Antriebssystem ferner Steuermittel (SW1, SW2) umfasst,
wobei die Antriebsmittel ein Motor (M) sind, zum Antreiben der Betätigungsmittel (14) zur Bewegung in einer ersten Richtung hin zur ersten Position der Betätigungsmittel (14) und in eine zweite Richtung hin zur zweiten Position der Betätigungsmittel (14), wobei die zweite Richtung der ersten Richtung entgegengesetzt ist, und
wobei die Steuermittel ein erster Schalter (SW1) und ein zweiter Schalter (SW2) sind, wobei der erste Schalter (SW1) durch die Betätigungsmittel (14) betätigbar ist, wenn diese sich in der ersten Position befinden, und vorzugsweise dazu angepasst ist, eine Positionierung des Topfverriegelungsmechanismus in seinem Verriegelungszustand als Reaktion auf die genannte Betätigung zu signalisieren, und wobei der zweite Schalter (SW2) durch die Betätigungsmittel (14) betätigbar ist, wenn diese sich in der zweiten Position befinden, und vorzugsweise dazu angepasst ist, eine Positionierung des Topfverriegelungsmechanismus in seinem Entriegelungszustand als Reaktion auf die genannte Betätigung zu signalisieren.

2. Topfverriegelungsmechanismus (10) nach Anspruch 1, wobei das zumindest eine Verriegelungselement eine Mehrzahl von Verriegelungselementen (12) ist.

3. Topfverriegelungsmechanismus (10) nach Anspruch 1 oder 2, wobei die Betätigungsmittel (14) zumindest eine Führungsbahn (28) umfassen, wobei jede Führungsbahn (28) vorzugsweise zur funktionellen Verbindung mit einem Verriegelungselement (12) ausgelegt ist.

4. Topfverriegelungsmechanismus (10) nach einem der Ansprüche 1 bis 3, wobei die Betätigungsmittel (14) zum Drehen um eine Achse (A) angepasst sind und das zumindest eine Verriegelungselement (12) zum Bewegen in eine lineare Richtung angepasst ist, wobei vorzugsweise das zumindest eine Verriegelungselement (12) relativ zu den Betätigungsmitteln (14) positioniert ist, um sich linear in einer radialen Richtung der Achse (A) zu bewegen.

5. Topfverriegelungsmechanismus (10) nach einem der Ansprüche 1 bis 4, wobei die Betätigungsmittel (14) ringförmig sind und so angepasst sind, dass sie einen Kochtopf (3) umgeben, wenn dieser auf und/oder in dem Boden (2) des Küchenverarbeitungsgeräts (1) aufgenommen ist.

6. Topfverriegelungsmechanismus (10) nach Anspruch 5, soweit abhängig von Anspruch 2, wobei die Mehrzahl von Verriegelungselementen (12) im Abstand voneinander um einen Umfang der Betätigungsmittel (14) herum angeordnet sind.

7. Topfverriegelungsmechanismus (10) nach einem der Ansprüche 3 sowie 4 bis 6, soweit abhängig von Anspruch 3, wobei die zumindest eine Führungsbahn (28) eine Längserstreckung in eine Richtung aufweist, die schräg relativ zu einer Bewegungsrichtung des zumindest einen Verriegelungselements (12) verläuft.

8. Topfverriegelungsmechanismus (10) nach einem der Ansprüche 1 bis 7, ferner umfassend eine Trägerstruktur (18), ausgelegt zur Aufnahme des Kochtopfs (3) und zum Tragen des zumindest einen Verriegelungselements (12) sowie der Betätigungsmittel (14) in einer Weise, die eine Bewegung des zumindest einen Verriegelungselements (12) und der Betätigungsmittel (14) relativ zur Trägerstruktur (18) ermöglicht.

9. Topfverriegelungsmechanismus (10) nach Anspruch 8, wobei die Trägerstruktur (18) eine Aufnahme (20) zur Aufnahme des Kochtopfs (3) und einen Flansch (22) umfasst, der die Aufnahme (20) umlaufend umgibt, wobei der Flansch (22) das zumindest eine Verriegelungselement (12) und die Betätigungsmittel (14) trägt.

10. Küchenverarbeitungsgerät (1), umfassend:
einen Kochtopf (3) mit zumindest einer Verriegelungsaufnahme (9);
einen Boden (2), ausgelegt zur Aufnahme des Kochtopfs (3), wobei der Boden (2) umfasst:
den Topfverriegelungsmechanismus (10) nach einem der Ansprüche 1 bis 9, wobei das zumindest eine Verriegelungselement (12) zum Eingriff mit der zumindest einen Verriegelungsaufnahme (9) ausgelegt ist, um den Kochtopf (3) mit dem Boden (2) zu verriegeln; und
eine Steuereinrichtung zum Verriegeln und Entriegeln des Kochtopfs, ausgelegt zur Steuerung des Betriebs des Topfverriegelungsmechanismus (10),
**dadurch gekennzeichnet, dass**
die Steuereinrichtung zum Verriegeln und Entriegeln des Kochtopfs zumindest einen Steuerprozessor und eine elektrische Verriegelungs- und Entriegelungsschaltung umfasst, die elektrisch mit dem Antriebssystem (M, SW1, SW2) des Topfverriegelungsmechanismus (10) und dem zumindest einen Steuerprozessor verbunden ist.

11. Küchenverarbeitungsgerät (1) nach Anspruch 10, wobei das zumindest eine Verriegelungselement (12) eine Mehrzahl von Verriegelungselementen (12) ist und die zumindest eine Verriegelungsaufnahme (9) eine entsprechende Mehrzahl von Verriegelungsaufnahmen (9) ist, wobei die Verriegelungsaufnahmen (9) an umlaufend beabstandeten Positionen an und/oder in dem Kochtopf (3) angeordnet sind, und wobei die Mehrzahl von Verriegelungselementen (12) so angeordnet ist, dass sie selektiv mit der Mehrzahl von Verriegelungsaufnahmen (9) des Kochtopfs (3) an den umlaufend beabstandeten Positionen des Kochtopfs (3) in Eingriff treten oder sich von ihnen lösen, wenn der Kochtopf (3) vom Boden (2) aufgenommen ist.

12. Küchenverarbeitungsgerät (1) nach einem der Ansprüche 10 bis 11, ferner umfassend eine Schneideinheit innerhalb des Kochtopfs (3) und eine Antriebssteuerung zum Steuern des Betriebs der Schneideinheit des Kochtopfs (3) innerhalb des Bodens (2), wobei die Antriebssteuerung dazu angepasst ist, den Betrieb der Schneideinheit des Kochtopfs (3) zu verhindern oder zu stoppen, wenn der Kochtopf (3) nicht durch den Topfverriegelungsmechanismus (10) mit dem Boden (2) verriegelt ist.

## Revendications

1. Mécanisme de verrouillage de récipient de cuisson (10) conçu pour verrouiller sélectivement un récipient de cuisson (3) d'un robot culinaire (1) à une base (2) du robot culinaire (1) dans un état de verrouillage et pour déverrouiller le récipient de cuisson (3) de la base (2) dans un état de déverrouillage, le mécanisme de verrouillage de récipient de cuisson (10) comprenant:
au moins un élément de verrouillage (12) pouvant être actionné pour passer d'une position de verrouillage à une position de déverrouillage, l'au moins un élément de verrouillage (12) étant conçu pour entrer en prise avec le récipient de cuisson (3) de manière à verrouiller le récipient de cuisson (3) sur la base (2) dans sa position de verrouillage et à ne pas entrer en prise avec le récipient de cuisson (3) de manière à pouvoir retirer sans entrave le récipient de cuisson (3) de la base (2) lorsqu'il se trouve dans sa position déverrouillée.
un moyen d'actionnement (14) pouvant se déplacer entre une première et une seconde position, le moyen d'actionnement (14) étant conçu pour coopérer fonctionnellement avec l'au moins un élément de verrouillage (12) de sorte que le mouvement du moyen d'actionnement (14) entraîne un mouvement correspondant de l'au moins un élément de verrouillage (12), dans lequel la coopération fonctionnelle du moyen d'actionnement avec l'au moins un élément de verrouillage (12) est conçue pour faire correspondre la première position du moyen d'actionnement (14) avec la position de verrouillage de l'au moins un élément de verrouillage (12) et pour faire correspondre la seconde position du moyen d'actionnement (14) avec la position de déverrouillage de l'au moins un élément de verrouillage (12), et
un système d'entraînement (M, SW1, SW2) conçu pour l'entraînement réglé du moyen d'actionnement (14) afin qu'il se déplace entre la première et la seconde position,
le système d'entraînement comprend un moyen d'entraînement (M), ledit mécanisme de verrouillage de récipient de cuisson étant **caractérisé en ce que** le système d'entraînement comprend en outre des moyens de commande (SW1, SW2),
le moyen d'entraînement étant un moteur (M) qui entraîne le moyen d'actionnement (14) dans une première direction vers et dans la première position du moyen d'actionnement (14) et dans une seconde direction vers et dans la seconde position du moyen d'actionnement (14), la seconde direction étant opposée à la première direction, et
les moyens de commande étant un premier interrupteur (SW1) et un second interrupteur (SW2), le premier interrupteur (SW1) par le moyen d'actionnement (14) lorsqu'il est placé dans la première position et, de préférence, conçu pour signaler que le mécanisme de verrouillage de récipient de cuisson est verrouillé en réponse audit actionnement, et le second interrupteur (SW2) pouvant être actionné par le moyen d'actionnement (14) lorsqu'il est placé dans la seconde position et, de préférence, conçu pour signaler que le mécanisme de verrouillage de récipient de cuisson est déverrouillé en réponse audit actionnement.

2. Mécanisme de verrouillage de récipient de cuisson (10) selon la revendication 1, dans lequel l'au moins un élément de verrouillage est une pluralité d'éléments de verrouillage (12).

3. Mécanisme de verrouillage de récipient de cuisson (10) selon la revendication 1 ou 2, dans lequel le moyen d'actionnement (14) comprend au moins un rail de guidage (28), chaque rail de guidage (28) étant de préférence conçu pour entrer en prise fonctionnellement avec un élément de verrouillage (12).

4. Mécanisme de verrouillage de récipient de cuisson (10) selon l'une quelconque des revendications 1 à 3, dans lequel le moyen d'actionnement (14) est conçu pour tourner autour d'un axe (A) et l'au moins un élément de verrouillage (12) est conçu pour se déplacer dans une direction linéaire, de préférence, l'au moins un élément de verrouillage (12) étant positionné par rapport au moyen d'actionnement (14) pour se déplacer linéairement dans une direction radiale de l'axe (A).

5. Mécanisme de verrouillage de récipient de cuisson (10) selon l'une quelconque des revendications 1 à 4, dans lequel le moyen d'actionnement (14) a la forme d'un anneau et est conçu pour entourer le récipient de cuisson (3) lorsqu'il est placé sur et/ou dans la base (2) du robot culinaire (1).

6. Mécanisme de verrouillage de récipient de cuisson (10) selon la revendication 5 dans la mesure où elle dépend de la revendication 2, dans lequel la pluralité des éléments de verrouillage (12) sont espacés les uns des autres sur la circonférence du moyen d'actionnement (14).

7. Mécanisme de verrouillage de récipient de cuisson (10) selon l'une quelconque des revendications 3 et 4 à 6 dans la mesure où elles dépendent de la revendication 3, dans lequel l'au moins un rail de guidage (28) a une extension longitudinale dans une direction oblique par rapport à une direction de mouvement de l'au moins un élément de verrouillage (12).

8. Mécanisme de verrouillage de récipient de cuisson (10) selon l'une quelconque des revendications 1 à 7, comprenant en outre une structure de support (18) conçue pour recevoir le récipient de cuisson (3) et pour supporter l'au moins un élément de verrouillage (12) ainsi que le moyen d'actionnement (14) de manière à permettre le mouvement du au moins un élément de verrouillage (12) et du moyen d'actionnement (14) par rapport à la structure de support (18).

9. Mécanisme de verrouillage de récipient de cuisson (10) selon la revendication 8, dans lequel la structure de support (18) comprend un contenant (20) destiné à recevoir le récipient de cuisson (3) et un rebord (22) sur la circonférence du contenant (20), le rebord (22) supportant l'au moins un élément de verrouillage (12) et le moyen d'actionnement (14).

10. Robot culinaire (1) comprenant:
un récipient de cuisson (3) comportant au moins un contenant de verrouillage (9);
une base (2) conçue pour recevoir le récipient de cuisson (3), la base (2) comprenant:
le mécanisme de verrouillage de la récipient de cuisson (10) de l'une quelconque des revendications 1 à 9, l'au moins un élément de verrouillage (12) étant conçu pour venir en prise avec l'au moins un contenant de verrouillage (9) afin de verrouiller le récipient de cuisson (3) à la base (2); et
une commande de verrouillage et de déverrouillage du récipient de cuisson conçu pour faire fonctionner le mécanisme de verrouillage du récipient de cuisson (10),
caractérisé en ce
la commande de verrouillage et de déverrouillage du récipient de cuisson comprend au moins un processeur de commande et un circuit de verrouillage et de déverrouillage du récipient de cuisson connecté électriquement au système d'entraînement (M, SW1, SW2) du mécanisme de verrouillage du récipient de cuisson (10) et à l'au moins un processeur de commande.

11. Robot culinaire (1) selon la revendication 10, dans lequel l'au moins un élément de verrouillage (12) est une pluralité d'éléments de verrouillage (12) et l'au moins un contenant de verrouillage (9) est une pluralité correspondante de contenants de verrouillage (9), les contenants de verrouillage (9) étant placés à des endroits espacés sur et/dans la circonférence du récipient de cuisson (3), et dans lequel la pluralité d'éléments de verrouillage (12) est conçue pour venir en prise ou se désolidariser sélectivement de la pluralité de contenants de verrouillage (9) du récipient de cuisson (3) aux endroits espacés sur la circonférence du récipient de cuisson (3) lorsque le récipient de cuisson (3) est logé dans la base (2).

12. Robot culinaire (1) selon l'une quelconque des revendications 10 à 11, comprenant en outre une unité de coupe dans le récipient de cuisson (3) et une commande pour faire fonctionner l'unité de coupe du récipient de cuisson (3) dans la base (2), la commande étant adaptée pour empêcher ou arrêter le fonctionnement de l'unité de coupe du récipient de cuisson (3) lorsque le récipient de cuisson (3) n'est pas verrouillé à la base (2) au moyen du mécanisme de verrouillage de récipient de cuisson (10).
